**Europäisches Patentamt**

**European Patent Office**

**Office européen des brevets**

(19)

(11) Veröffentlichungsnummer : **0 079 448**
**B1**

(12) **EUROPÄISCHE PATENTSCHRIFT**

(45) Veröffentlichungstag der Patentschrift :
26.03.86

(51) Int. Cl.⁴ : **F 16 J 15/12**, F 16 L 23/00

(21) Anmeldenummer : **82108840.8**

(22) Anmeldetag : **24.09.82**

(54) **Unterfütterte Dichtung und Verfahren zur Herstellung einer unterfütterten Dichtung oder Dichtungseinlage.**

(30) Priorität : **27.10.81 DE 3142535**

(43) Veröffentlichungstag der Anmeldung :
**25.05.83 Patentblatt 83/21**

(45) Bekanntmachung des Hinweises auf die Patenterteilung : **26.03.86 Patentblatt 86/13**

(84) Benannte Vertragsstaaten :
**CH DE FR GB IT LI**

(56) Entgegenhaltungen :
**DE-A- 2 709 702**
**DE-U- 7 634 103**
**US-A- 3 230 290**

(73) Patentinhaber : **Pfaudler-Werke AG**
**Scheffelstrasse 55**
**D-6830 Schwetzingen (DE)**

(72) Erfinder : **Schneider, Walter**
**Königsberger Strasse 8**
**D-6834 Ketsch (DE)**
Erfinder : **Ebert, Klaus-Peter**
**Reilsheimer Weg 19**
**D-6901 Gaiberg (DE)**
Erfinder : **Otto, Konrad**
**Ostpreussenring 10**
**D-6830 Schwetzingen (DE)**

(74) Vertreter : **Endlich, Fritz, Dipl.-Phys.**
**Postfach 1326**
**D-8034 Germering (DE)**

EP 0 079 448 B1

**Beschreibung**

Die Erfindung betrifft eine unterfütterte Dichtung und ein Verfahren zur Herstellung einer unterfütterten Dichtung.

Bekanntlich ist es verhältnismäßig häufig der Fall, daß beispielsweise bei emaillierten Apparaten abzudichtende Flansche von der Idealform abweichen, weil bei den hohen Einbrenntemperaturen sich der Stahl mehr oder weniger verzieht. Insbesondere bleibt der Flansch des Rührwerkstutzens meist nicht waagrecht. Da jedoch die Gleitringeinheit oder die Stopfbuchse genau senkrecht auf dem Behälter stehen muß, müssen Niveauunterschiede am Rührwerkstutzen durch Ausgleichseinlagen der betreffenden Dichtung ausgeglichen werden. Eine Unterfütterung erfordernde, verhältnismäßig große brennverzüge treten insbesondere auch bei Mannlochstutzen oder Behälterflanschen mit sehr großem Durchmesser auf.

Ein seit Jahrzehnten bewährtes Verfahren zur Herstellung unterfütterter Dichtungen für emaillierte Apparate besteht darin, daß segmentförmige Ausgleichseinlagen in Dichtungen eingebracht werden, die vorzugsweise aus zwei It-Dichtungseinlagen (DIN 3754) bestehen, zwischen denen ein Wellring angeordnet ist, und die von einer Hülle aus Polytetrafluoräthylen umgeben sind. Die segmentförmigen Ausgleichseinlagen werden durch Schleifen oder Feilen der Enden angepaßt. Wenn der durch Brennverzüge verursachte Spalt zwischen den Dichtflächen verhältnismäßig groß ist, müssen mehrere Ausgleichseinlagen übereinander angeordnet werden, bis der Spalt geschlossen ist. Die meist aus asbesthaltigen Materialien bestehenden Ausgleichseinlagen werden auf die entsprechenden Stellen des It-Rings geklebt.

Bei bekannten Verfahren dieser Art wird noch als nachteilig angesehen, daß das Anpassen der Dichtungen an verzogene Stutzen einen verhältnismäßig großen Zeitaufwand von beispielsweise einigen Stunden erfordert. Außerdem ist eine große handwerkliche Erfahrung und gewissenhafte Arbeitsweise des Monteurs erforderlich, da hohe Anforderungen an die Arbeitsgenauigkeit zu stellen sind. Darüberhinaus sind die Schleifarbeiten an asbesthaltigen Materialien gesundheitsschädlich, wenn die erforderlichen Sicherheitsvorschriften nicht sorgfältig eingehalten werden. Eine besondere Schwierigkeit besteht ferner darin, daß die Setzbeträge der Dichtung von der Unterfütterungsstärke abhängig sind. Auch bei sehr sorgfältiger ursprünglicher Anpassung bei der Herstellung kann es ferner vorkommen, daß nach längerem Produktionsbetrieb Undichtigkeiten auftreten, so daß auch am Einsatzort erneute Anpassungen erforderlich werden können. Da jedoch nicht immer erfahrene Monteure zur Verfügung stehen, können durch die erforderlichen, verhältnismäßig langwierigen Arbeiten beträchtliche Ausfallzeiten verursacht werden.

Es ist ferner ein Verfahren bekannt, bei dem zur Herstellung einer Dichtung mit einer Ausgleichseinlage eine fließfähige aushärtbare Harzmasse bei Anordnung der Dichtung zwischen den Dichtflächen ausgeformt und ausgehärtet wird (US-A-3 230 290). Dieses Verfahren fand jedoch in der Praxis zur Herstellung unterfütterter Dichtungen für emaillierte Apparate vermutlich deshalb bisher keine bekanntgewordene Verwendung, weil damit eine zufriedenstellende Abdichtung und Lebensdauer der Dichtung nicht ohne weiteres erzielbar sind. Wenn nämlich die Elastizität und Deformierbarkeit geringer als diejenige der elastischen Dichtungseinlageringe der Dichtung ist, werden beim Anziehen der Flanschen die Einlageringe verhältnismäßig stark verformt, während die ausgehärtete Harzmasse in dem Zwischenraum zwischen der radialen Innenfläche der Einlageringe und dem inneren Hüllteil der äußeren Hülle aus Polytetrafluoräthylen praktisch nicht verformt wird, so daß die Gefahr besteht, daß die äußere Hülle im Bereich der radialen Innenflächen der Einlageringe aufgerissen und die Dichtung unbrauchbar wird. Wenn dagegen die Elastizität der ausgehärteten Harzmasse verhältnismäßig hoch ist, dann verformt sich die durch die ausgehärtete Harzmasse gebildete Ausgleicheinlage im Bereich der Unterfütterfungsstelle zu stark, so daß auf die Dichtung an dieser Stelle eine zu geringe Pressung ausgeübt wird. Entsprechende Schwierigkeiten können sich auch dadurch ergeben, daß die bekannten Harzmassen eine verhältnismäßig hohe Wärmeausdehnung innerhalb der Temperaturbereiche haben, die beim Betrieb emaillierter Apparate noch zulässig sein müssen. Ferner ist es verhältnismäßig aufwendig, entlang der Außenfläche der Harzmasse einen metallischen Ring oder in der Harzmasse metallische Drähte anzuordnen, um dem Austreten von Harz zur Außenseite hin entgegenzuwirken.

Es ist deshalb Aufgabe der Erfindung, eine unterfütterte Dichtung und ein Verfahren zur Herstellung einer unterfütterten Dichtung unter möglichst weitgehender Vermeidung der genannten Nachteile und Schwierigkeiten derart zu verbessern, daß einerseits die Anpassungsarbeiten einfacher und schneller durchführbar sind, und daß andererseits eine Verbesserung des Setzverhaltens bei zufriedenstellendem Rückfederungsverhalten erzielt werden kann.

Diese Aufgabe wird bei einem Verfahren zur Herstellung einer unterfütterten Dichtung erfindungsgemäß dadurch gelöst, daß der Harzmasse vor dem Einbringen ein Füllstoff aus Quarzmehl oder dergleichen anorganischem Material in Pulverform oder Faserform in einer derartigen Menge zugesetzt wird, daß die Harzmasse pastös wird, das Lückenvolumen des Füllstoffs im wesentlichen durch das ausgehärtete Material ausgefüllt wird und für den Verwendungszweck im Vergleich zu ausgehärtetem Harz verbesserte physikalische Eigenschaften der ausgehärteten Masse hinsichtlich deren Druckfestigkeit, Temperaturbeständigkeit und/oder Wärmeausdehnung, sowie hinsichtlich des Setzverhaltens der Dichtung erzielbar sind.

Die auszuhärtende pastöse Masse kann beispielsweise mit Hilfe einer Spritzpistole oder einer Spachtel mit verhältnismäßig geringem Arbeitsaufwand aufgebracht werden. Da dieses Verfahren verhältnismäßig einfach durchführbar ist, kann auch am Einsatzort eine Anpassung durch Arbeitskräfte erfolgen, an die nicht so große Anforderungen hinsichtlich handwerklicher Erfahrungen gestellt werden müssen, als es bei dem bisher üblichen Verfahren der Fall war, bei dem Schleifarbeiten an dem asbesthaltigen Unterfütterungsmaterial durchgeführt werden müssen. Die pastöse Masse wird aus derartigen Materialien zusammengesetzt, daß die ausgehärtete Masse für den betreffenden Verwendungszweck geeignete physikalische Eigenschaften aufweist, insbesondere hinsichtlich Setzverhalten, Rückfederungsverhalten und Temperaturbeständigkeit. Die pastöse Masse enthält deshalb einen Füllstoff, der beispielsweise aus Quarzmehl besteht, dessen Lückenvolumen durch ein 2-Komponenten-Kunstharz ausgefüllt ist. Der Zusatz eines Füllstoffs ermöglicht eine Anpassung an die geforderten Eigenschaften sowohl bei der Verarbeitung als auch beim Betrieb, zum Beispiel hinsichtlich Viskosität, Elastizität, Druckfestigkeit, Zugfestigkeit, Temperaturbeständigkeit, Wärmeausdehnungskoeffizient und Topfzeit. Als Füllstoffe sind Quarz oder dergleichen anorganische Materialien wie Glas, Aluminiumoxid oder Grafit geeignet, die in Pulverform mit geeigneter Körnung oder in Faserform zugesetzt werden können.

Eine unterfütterte Dichtung gemäß der Erfindung ist dadurch gekennzeichnet, daß ein inneres Hüllelement die Ausgleichseinlage aus der Harzmasse zumindest im Bereich deren inneren Umrandung umgibt, und daß die ausgehärtete Harzmasse einen Füllstoff aus Quarzmehl oder dergleichen anorganischem Material in Pulverform oder Faserform in einer derartigen Menge enthält, daß das Lückenvolumen des Füllstoffs im wesentlichen durch das ausgehärtete Harzmaterial ausgefüllt ist. Das innere Ende des inneren Hüllelements kann als ringwulstoförmiger Füllring ausgebildet sein, der den Zwischenraum zwischen der radialen Innenfläche und dem inneren Hüllteil der äußeren Hülle teilweise ausfüllt. Dadurch ergibt sich nicht nur der Vorteil, daß kein zusätzlicher O-Ring eingesetzt werden muß, um bei Überdruck beziehungsweise Unterdruck in dem Behälter Beschädigungen der äußeren Hülle zu vermeiden, sondern es besteht auch im Gegensatz zu bekannten Dichtungen, bei denen der Zwischenraum unkontrolliert ganz oder teilweise durch die ausgehärtete Harzmasse gefüllt ist, der Vorteil, daß praktisch keine Beschädigungsgefahr für die äußere Hülle in diesem Bereich vorhanden ist. Von Ausnahmefällen bei verhältnismäßig geringer Beanspruchung abgesehen, enthält die Harzmasse einen Füllstoff der beschriebenen Art, wobei das Lückenvolumen des Füllstoffs durch das ausgehärtete Harzmaterial ausgefüllt ist. Vorzugsweise besteht der Füllstoff aus Quarzmehl, wobei der Quarzanteil bei einer Körnung 10 etwa 45 % und bei einer Körnung 00 etwa 57 % beträgt.

Anhand der Zeichnung soll die Erfindung beispielsweise näher erläutert werden. Es zeigen :

Figur 1   eine Schnittansicht durch eine Dichtung, die nach dem Verfahren gemäß der Erfindung hergestellt ist ;

Figur 2a-2g   weitere Ausführungsbeispiele von Dichtungen, die nach dem Verfahren gemäß der Erfindung hergestellt sind ;

Figur 3   ein weiteres Ausführungsbeispiel einer Dichtung gemäß der Erfindung ;

Figur 4   eine Schnittansicht durch ein bevorzugtes Ausführungsbeispiel einer Dichtung gemäß der Erfindung ; und

Figur 5   eine Schnittansicht zur Erläuterung des Verfahrens zur Herstellung der Dichtung in Fig. 4.

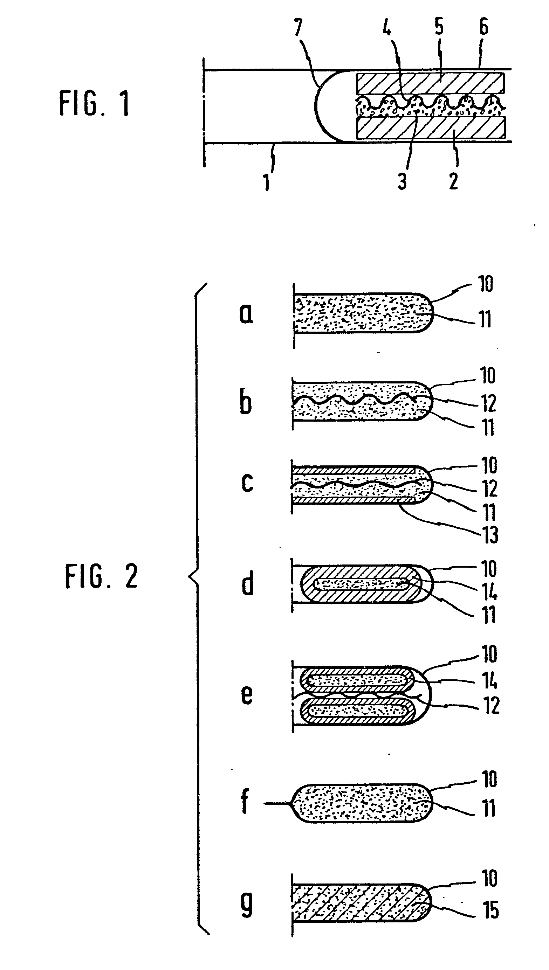

Fig. 1 zeigt ein Ausführungsbeispiel einer Dichtung, die mit einem Verfahren gemäß der Erfindung hergestellt ist. Der Schnitt liegt in einem Bereich, in dem eine Unterfütterung mit Hilfe einer aushärtenden pastösen Masse erfolgte. Im folgenden soll die Herstellung dieser fertigen Dichtung beschrieben werden.

Zur Herstellung der pastösen Masse findet vorzugsweise ein 2-Komponenten-Epoxydharz Verwendung. Die reaktive Harzkomponente wird zunächst mit Quarzmehl in einem Rührgefäß vermischt. Die Masse an Quarz, die für eine gewünschte Masse fertiger Mischung benötigt wird, wird vorzugsweise so festgelegt, daß das Lückenvolumen zwischen den Quarzkörnern vom Harz voll ausgefüllt wird.

Für die Dichtung Nr. 4 in der folgenden Tabelle wurde Quarzmehl mit einer Körnung 10 für die Dichtung 5 Quarzmehl mit einer Körnung 00 verwendet. Die entsprechend der oben ermittelten Formel bestimmten Quarzanteile betrugen deshalb für die Dichtung 4 45 % und für die Dichtung 5 57 %. Die benötigte Masse Harzmischung ergibt sich aus der Differenz der Gesamtmasse und der Quarzmasse. Die Harzmischung wird dann entsprechend der Rezeptur des 2-Komponenten-Epoxydharzes (beispielsweise 100 Teile Harzkomponente und 40 Teile Härter) mit der notwendigen Härtermenge gründlich durchmischt. Durch Erwärmen der Mischung kann eine zum Auftragen geeignete Viskosität erzielt werden, so daß die Masse beispielsweise mit einer Spritzpistole aufgetragen werden kann, deren Mundstück beispielsweise eine Abmessung von 3 × 25 mm besitzt.

Wie bereits erwähnt wurde, können jedoch auch andere Zusammensetzungen der Mischung der pastösen Masse mit Polymerisaten, Vernetzungsklebern oder dergleichen Kunststoffen Verwendung finden, die dem betreffenden Verwendungszweck angepaßt sind. Entsprechendes gilt für den Füllstoff hinsichtlich Korngrößenverteilung und/oder Zusammensetzung, so daß beispielsweise auch gemahlene Glasfritten, Metallkarbide, Metall- und Halbmetallnitride bzw. -karbide, keramische Massen oder Grafit mit geeigneten Mischungsverhältnissen von Füllstoff zu Kunstharz verwendbar sind.

Zur Herstellung der in Fig. 1 dargestellten Dichtung wird zunächst auf die Dichtfläche eines

3

emaillierten Flanschs 1 eine vorgefertigte Dichtungseinlage in Form eines It-Rings 2 aufgelegt. Mit Hilfe einer Spritzpistole wird dann die pastöse Masse 3 auf die Oberseite des It-Rings 2 aufgetragen. Wahlweise kann der Auftrag mit Spachtel, Spritzbeutel oder einfaches Auflegen vorgeformter Teile erfolgen, welche die Komponenten des Kunstharzes in Mikroballons enthalten.

Vor dem Auftragen der Masse wird der Verzug zwischen den beiden Dichtflächen der Flanschen 1, 6 ausgemessen, da sie Höhe des Auftrags zweckmäßigerweise bei der oben beschriebenen Masse einer zusätzlichen Höhe von etwa 2-4 mm entsprechen soll. Auf die aufgetragene Masse wird dann ein Wellring 4 und darüber eine oberer It-Ring 5 aufgelegt. Danach erfolgt das Absenken des oberen Flanschs 6, der beispielsweise ein Deckelflansch ist, bis an allen Stellen des Auftrags pastöse Masse hervorquillt. Falls erforderlich wird der Deckel mit vier Schrauben leicht angezogen. Zusätzlich können in gewissem Umfang Lagekorrekturen durchgeführt werden. Danach wird der Deckel abgehoben und überschüssige pastöse Masse abgestreift. Die so gebildete Dichtungseinheit 2-5 wird dann mit einer für vergleichbare Dichtungen üblichen hulle 7 aus Polytetrafluoräthylen oder dergleichen Material umgeben. Danach wird der Deckel mit dem Flansch 6 wieder abgesenkt, um das Aushärten der pastösen Masse unter Druckausübung zwischen den Dichtflächen durchzuführen. Bei Verwendung eines schnell härtenden Kunstharzes oder durch Wärmezufuhr genügen zum Aushärten bereits 10-20 Minuten. Nach dem Aushärten erfolgt die endgültige Montage des Deckels.

In Fig. 2 sind weitere Ausführungsbeispiele von Dichtungen dargestellt, die mit dem Verfahren gemäß der Erfindung hergestellt werden können.

Fig. 2a zeigt eine zwischen zwei von einer planparallelen Ausbildung abweichenden Dichtflächen hergestellte Dichtung, die zwei äußere, durch eine Hülle 10 gebildete Hüllschichten aufweist, die die ausgehärtete Masse 11 umgeben.

Bei dem Ausführungsbeispiels in Fig. 2b und Fig. 2c ist in der Masse 11 ein Wellring 12 angeordnet. Bei dem Ausführungsbeispiel in Fig. 2c ist ein unterer Einlagering 13 und ein entsprechender oberer Einlagering vorgesehen. Im Gegensatz zu dem Ausführungsbeispiel in Fig. 1 kann auch ein zusätzlicher Auftrag der pastösen Masse 11 über dem Wellring 12 erfolgen.

Bei dem Ausführungsbeispiel in Fig. 2d ist in der Hülle 10 ein mit der Masse 11 gefülltes Hohlprofil 14 vorgesehen. Da das Epoxydharz nach der Aushärtung den Profilring voll ausfüllt, ergibt sich nach dem Aushärten eine formgenaue und dimensionsstabile Ausbildung. In Fig. 2e sind zwei derartige Hohlprofile 14 vorgesehen, zwischen denen ein Wellring 12 eingelegt ist.

Fig. 2f zeigt eine geschlossene Hülle 10, die mit der Masse 11 ausgefüllt ist, und Fig. 2g zeigt eine einseitig offene Hülle 10, die mit einem schwammartigen Werkstoff 15 gefüllt ist, der mit der Masse aus härtbarem Material getränkt ist.

Unter einer « pastösen » Masse im Sinne der Erfindung ist deshalb nicht nur eine pastenförmige oder sonstige plastische Masse zu verstehen, sondern auch vorgeformte Teile, die beispielsweise mit den Komponenten des Kunstharzes getränkt sind oder diese in Mikroballons enthalten.

Die Ausführungsbeispiele in Fig. 2 können auch miteinander kombiniert werden, wie beispielsweise das Ausführungsbeispiel in Fig. 2g mit dem Ausführungsbeispiel in Fig. 2b und 2c. Die Ausführungsbeispiele in Fig. 2 sind ferner als komplette Dichtungen oder auch als Dichtungseinlagen verwendbar. Die Herstellung derartiger Dichtungseinlagen ist beispielsweise dann von Interesse, wenn die für die Einlagen normalerweise verwendeten Werkstoffe nicht geeignet sind, oder wenn außergewöhnliche Dichtungsabmessungen oder Dichtungsformen wie unrunde Dichtungen kurzfristig hergestellt werden sollen.

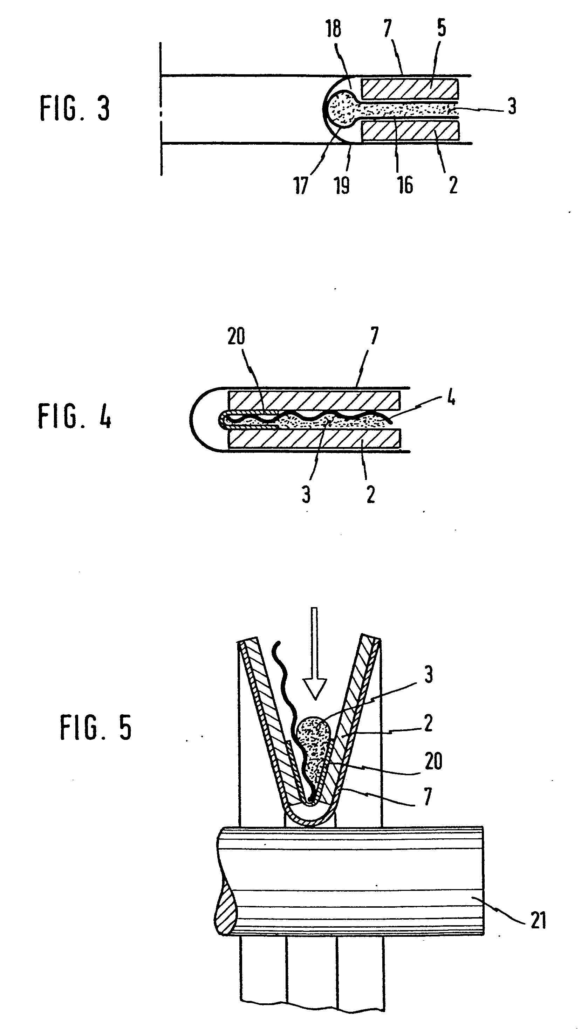

Fig. 3 zeigt ein im Vergleich zu Fig. 1 abgewandeltes Ausführungsbeispiel, bei dem wie in Fig. 1 eine äußere Hülle 7 und zwei it-Einlageringe 2,5 vorgesehen sind. Im Gegensatz zu Fig. 1 ist dabei zwischen den beiden It-Einlageringen eine innere Hülle 16 angeordnet, deren inneres Ende 17 einen durch die Masse 3 ausgefüllten ringwulstförmingen Füllring bildet, der den Zwischenraum 18 zwischen der Innenfläche der Einlageringe 2,5 und dem inneren Hüllteil 19 der äußeren hülle 6 mindestens teilweise ausfüllt. Bekanntlich ist es zweckmäßig, bei Dichtungen mit einer äußeren Hülle 7, die normalerweise aus Polytetrafluoräthylen besteht, den durch den inneren Hüllteil 19 begrenzten Zwischenraum 18 durch einen Füllring auszufüllen, weil sich bei innerem Überdruck im Reaktionsgefäß die außere Hülle unter Faltenbildung an die Innenfläche der Einlageringe anlegt, während bei Unterdruck im Reaktionsgefäß die äußere Hülle wieder aufgefaltet wird. Durch diese Wechselbeanspruchung können Poren und Risse an den Knickstellen auftreten, die die Lebensdauer der gesamten Dichtung beträchtlich herabsetzen. Gegenüber Füllringen bekannter Art bestehen Vorteile des Füllrings in Fig. 3 vor allem darin, daß die Dichtung einfacher herstellbar ist, da kein zusätzlicher Füllring bekannter Art hergestellt und eingebaut werden muß.

Beim Einbau wird diese Dichtung zunächst auf die Dichtfläche einer Flanschhälfte gelegt. Dann wird in die innere Hülle 16 entlang dem gesamten Umfang eine bestimmte Menge der pastösen Masse 3 eingebracht. Daraufhin wird die Dichtfläche des zweiten Flanschs aufgebracht und die Dichtung etwas vorgepreßt. In diesem Zustand erfolgt das Aushärten der Masse. Es ist dann lediglich noch notwendig, die nach außen ausgetretene überschüssige Menge der pastösen Masse 3 zu entfernen. Dieses Verfahren ist besonders einfach, weil die Dichtung nach der Unterfütterung nicht mehr demontiert werden muß. Bei der in Fig. 1 dargestellten Dichtung ist es dagegen zweckmäßig, die Dichtung nach dem Aushärten der pastösen Masse von dem Behälter zu demontieren, um die am Innendurchmesser der Einlageringe 2,5 ausgetretene pastöse Masse zu entfernen, damit keine scharfen Kanten gebildet werden, durch welche die äußere Hülle 7 bei Überdruck in dem betreffenden Behälter beschädigt werden könnte. Wenn bei dem Ausführungsbeispiel in Fig. 3 die äußere Hülle 7 aus irgendeinem Grund beschädigt und unbrauchbar wird, kann diese wie bei dem Ausführungsbeispiel in Fig. 1 ohne weiteres durch eine neue äußere Hülle ersetzt werden.

Fig. 4 zeigt ein bevorzugtes Ausführungsbeispiel einer Dichtung gemäß der Erfindung, die wie bei den Ausführungsbeispielen in Fig. 1 und 3 von einer äußeren Hülle 7 umgeben ist, zwei Dichtungseinlageringe 2,5 enthält sowie einen über der ausgehärteten Materialschicht 3 angeordneten Wellring 4. Bei diesem Ausführungsbeispiel ist jedoch eine innere Hülle 20 vorgesehen, welche die ausgehärtete Materialschicht 3 und den Wellring 4 nur im Bereich der inneren Umrandung umgibt. Das bevorzugte Verfahren zur Herstellung dieser Dichtung soll in Verbindung mit Fig. 5 erläutert werden. Die in Fig. 5 dargestellte Dichtungseinheit wird beispelsweise über ein Holzstück 21 vertikal gezogen, so daß entlang dem Außenumfang zwischen dem Wellring 4 und dem Dichtungseinlagering 2 die pastöse Masse 3 bis etwa zur Höhe der bandförmigen inneren Hülle 20 eingefüllt werden kann. Falls größere Spaltabstände zwischen den Dichtflächen zu überbrücken sind, kann zusätzlich pastöse Masse in grob abgeschätzter Menge in den entsprechenden Dichtungsbereich eingeführt werden. Vorzugsweise wird die als Unterfütterungswerkstoff dienende pastöse Masse in einer Kartusche mit Härter gründlich gemischt, beispielsweise mit einem an einer Bohrmaschine angeordneten wendelförmigen Rührer, bis eine homogene und handwarme pastöse Masse entsteht. Die mit einer Spritztülle versehene Kartusche wird dann in eine Druckluftpistole eingesetzt, so daß die pastöse Masse in einfacher Weise dosiert eingespritzt werden kann. Im allgemeinen ist ein gleichförmiges Einspritzen der Masse ausreichend, wenn nur Spalten von etwa 3 bis 4 mm ausgefüllt werden sollen. Nach dem Einspritzen wird die Dichtungseinheit beispelsweise auf einen Behälterflansch aufgelegt, der dazugehörige Deckel wird aufgesetzt und mit zwei Klammerschrauben fixiert. Die Klammerschrauben werden vorzugsweise an Stellen mit geringem Spalt angesetzt. Durch leichtes Anziehen der Klammerschrauben wird die Dichtung ausgeformt. Nach dem Entfernen des nach außen ausgedrückten Harzes am Außenrand der Dichtung können die übrigen Klammerschrauben fertig montiert und leicht angezogen werden. Nach Aushärtung der pastösen Masse können die Klammerschrauben auf Nenn-Anzugsmoment gebracht werden.

Die Tabelle betrifft Vergleichsversuche mit Dichtungen Nr. 1-5. Die Dichtung Nr. 1 ist eine an sich bekannte Dichtung, die wie die Dichtung in Fig. 1 aus 2 It-Ringen 2, 5, einem Wellring 4 und einer Hülle 7 aus Polytetrafluoräthylen besteht, jedoch im Gegensatz zu der vorliegenden Erfindung keine Unterfütterung aus einer ausgehärteten pastösen Masse aufweist. Bei der Dichtung Nr. 2 ist zusätzlich eine an sich bekannte Einlage aus It-Material mit einer Dicke von 2 mm vorgesehen.

Die Dichtungen Nr. 3-5 entsprechen Ausführungsbeispielen gemäß der Erfindung. Die Dichtung Nr. 3 enthält eine Unterfütterung aus gehärtetem Epoxydharz, das jedoch nur einen verhältnismäßig geringen Füllstoffzusatz in Form von feinem Quarzstaub enthält. Die Dichtungen Nr. 4 und 5 entsprechen dem in Verbindung mit Fig. 1 beschriebenen Ausführungsbeispiel, mit einem Quarzanteil von 45 % (Körnung 10) bzw. einem Quarzanteil von 57 % (Körnung 00). Die folgende Tabelle betrifft die Setzbeträge dieser Dichtungen in Abhängigkeit von der Lastwechselanzahl LW bei einer Temperatur von 150 °C. Es ist ersichtlich, daß die Setzbeträge der mit Kunstharz unterfütterten Dichtungen Nr. 3-5 eng beieinander liegen, während die Meßergebnisse der mit einer zusätzlichen Lage aus It-Material unterfütterten Dichtung Nr. 2 sich deutlich davon abheben.

Die letzte Spalte der Tabelle zeigt die Rückefederung dieser Dichtungen in Abhängigkeit von der Anzahl der Lastwechsel. Alle Dichtungen nähern sich asymptotisch einem Wert an, der bei etwa 0,2 bis 0,25 mm liegt, bei einer Dichtungsstärke von 9,5 mm.

Aus einem Vergleich der Versuchsergebnisse der Setzbeträge ergibt sich, daß das Setzverhalten der bekannten Dichtung Nr. 1 durch die Unterfütterung mit gefüllten Kunstharz entsprechend Ausführungsbeispielen gemäß der Erfindung praktisch nicht beeinflußt wird. Eine Unterfütterung mit It-200 (Dichtung Nr. 2) verursacht dagegen eine wesentliche Verschlechterung des Setzverhaltens. Deshalb sind Dichtungen entsprechend den beschrieben Ausführungsbeispielen der Erfindung in ihrem Setzverhalten gleichmäßiger als mit einem It-Material unterfütterte Dichtungen. In der Praxis bedeutet das, daß der Setzbetrag von Dichtungen gemäß der Erfindung nahezu unabhängig von der Unterfütterungsstärke ist.

Die Anzahl der Lastwechsel, nach der die Setzung auf 0,01 mm/LW zurückgeht, ist eine willkürlich gewählte Vergleichszahl, die es erlaubt, verschiedene Dichtungstypen hinsichtlich ihres Dauerverhaltens zu beurteilen. Je geringer die Anzahl der erforderlichen Lastwechsel ist, um so schneller wird die endgültige Dichtwirkung erreicht. Das beste Ergebnis wurde bei den beschriebenen Ausführungsbeispielen mit der Dichtung Nr. 5 erzielt, bei der das Kunstharz mit grobem Quarzmehl der Körnung 00 gefüllt ist.

Die folgende Tabelle enthält eine Übersicht über die Meßergebnisse am Dichtungsprüfstand.

(Siehe Tabelle Seite 6 f.)

Tabelle

| Nr. | Aufbau | Setzbetrag in mm nach | | | Setzbetrag 0,01 mm/LW | Rückfederung in mm 25 LW |
|---|---|---|---|---|---|---|
| | | 5 LW | 10 LW | 25 LW | | |
| 1 | Teflonhülle 2x Einlage It 200 2mm Wellring | 2,468 | 2,520 | 2,579 | 10 | 0,190 |
| 2 | + 1 Einlage It 200 2mm | 3,275 | 3,353 | 3,440 | 11 | 0,289 |
| 3 | + Quarz/ Harzmisch. | 2,418 | 2,480 | 2,543 | 8 | 0,273 |
| 4 | + Quarz Körnung 10/ [1] Harzmischung | 1,940 | 1,995 | 2,051 | 9 | 0,278 |
| 5 | + Quarz Körnung 00/ [2] Harzmischung | 2,339 | 2,390 | 2,448 | 7 | 0,232 |

[1] Lückenvolumen des Quarzes mit Harz gefüllt. Korngröße ca. 40 ... 63 $\mu$m

[2] Lückenvolumen des Quarzes mit Harz gefüllt. Korngröße ca. 125 $\mu$m

Obwohl die beschriebenen Ausführungsbeispiele Dichtungen für Anschlußstutzen emaillierter Apparate betreffen, sind derartige Dichtungen auch bei Distanzanpassungen von Flanschverbindungen, z. B. an Rohrleitungen oder Wärmeübertragungen verwendbar, sowie für die Herstellung nicht kreisrunder Dichtungen, Dichtungen für zu einander geneigte Dichtflächen, Dichtungen zum Ausgleich von Fluchtungsfehlern und dergleichen Verwendungszwecke.

Bei Verwendung von Dichtungen der beschriebenen Art, beispielsweise bei der sehr einfach herstellbaren bevorzugten Dichtung in Fig. 4, in Verbindung mit emaillierten Flanschen ergeben sich nicht nur besonders gleichförmige Dichtungskennwerte am Umfang, die unabhängig von der jeweiligen Unterfütterungsstärke sind, sondern es wird auch keine Biegung in den emaillierten Flanschen beim Nachziehen verursacht, da sich die Dichtung auch bei variabler Unterfütterungsstärke gleichmäßig setzt. Es wird ein schnelles « Stehenbleiben » der Dichtung nach der Inbetriebnahme erzielt und auch bei ungünstiger Flanschgeometrie, beispielsweise bei einem nach innen geöffneten Dichtungsspalt oder bei geringfügiger Welligkeit, ist eine gleichmäßige Flächenpressung erreichbar.

**Patentansprüche**

1. Verfahren zur Herstellung einer unterfütterten Dichtung zwischen zwei von einer planparallelen Ausbildung abweichenden Dichtflächen, insbesondere zwischen verzogenen Flanschen (1, 6) eines emaillierten Apparats, bei dem eine fließfähige aushärtbare Harzmasse in eine äußere Umhüllung (7) der Dichtung eingebracht und zwischen den formgebenden Dichtflächen ausgehärtet wird, um eine Ausgleichseinlage zu bilden, dadurch gekennzeichnet, daß der Harzmasse vor dem Einbringen ein Füllstoff aus Quarzmehl oder dergleichen anorganischem Material in Pulverform oder Faserform in einer derartigen Menge zugesetzt wird, daß die Harzmasse pastös wird, das Lückenvolumen des Füllstoffs im wesentlichen durch das ausgehärtete Material ausgefüllt wird und für den Verwendungszweck im Vergleich zu ausgehärtetem Harz verbesserte physikalische Eigenschaften der ausgehärteten Masse hinsichtlich deren Druckfestigkeit, Temperaturbeständigkeit und/oder Wärmeausdehnung, sowie hinsichtlich des Setzverhaltens der Dichtung erzielbar sind.

2. Verfahren nach Anspruch 1, dadurch gekennzeichnet, daß die Füllstoff enthaltende pastöse Harzmasse in ein in der äußeren Umhüllung (7) angeordnetes inneres Umhüllgselement (16 ; 20) eingebracht wird.

3. Unterfütterte Dichtung zur Anordnung zwischen zwei von einer planparallelen Ausbildung abweichenden Dichtflächen, insbesondere zwischen verzogenen Flanschen (1, 6) eines emaillierten Apparats, mit einer Ausgleichseinlage aus einer zwischen den abzudichtenden Dichtflächen ausgeformten und ausgehärteten Harzmasse, die zwischen zwei elastischen Dichtungseinlageringen (2, 5) angeordnet ist, welche von einer äußeren Umhüllung (7) aus Polytetrafluoräthylen oder dergleichen Hüllmaterial umgeben sind, dadurch gekennzeichnet, daß ein inneres Hüllelement (16 ; 20) die Ausgleichseinlage aus der Harzmasse (3) zumindest im Bereich deren inneren Umrandung umgibt, und daß die ausgehärtete Harzmasse einen Füllstoff aus Quarzmehl oder dergleichen anorganischen Material in Pulverform oder Faserform in einer derartigen Menge enthält, daß das Lückenvolumen des Füllstoffs im wesentlichen durch das ausgehärtete Harzmaterial ausgefüllt ist.

4. Unterfütterte Dichtung nach Anspruch 3, dadurch gekennzeichent, daß das innere Hüllelement Bestandteil einer nur zum Außenumfang geöffneten inneren Umhüllung (16) ist, deren inneres Ende (17) einen ringwulstförmigen Füllring bildet, der den Zwischenraum (18) zwischen der radialen Innenfläche der Einlageringe (2,5) und dem inneren Hüllteil (19) der äußeren Hülle (7) teilweise ausfüllt.

5. Unterfütterte Dichtung nach Anspruch 3 oder 4, dadurch gekennzeichnet, daß der Quarzanteil bei einer Körnung 10 des Quarzmehls 45 % beträgt.

6. Unterfütterte Dichtung nach Anspruch 3 oder 4, dadurch gekennzeichnet, daß der Quarzanteil bei einer Körnung 00 des Quarzmehls 57 % beträgt.

## Claims

1. Method of making a lined seal between two sealing surfaces deviating from a plane parallel form, especially between distorted flanges (1, 6) of an enamelled apparatus, in which method a flowable hardenable resin mass is placed into an outer wrapping (7) of the seal and is hardened between the forming sealing surfaces, in order to form a compensating insert, characterized in that into the resin mass before placing a filler of powdered quartz or the like inorganic material in the form of powder or fibers is added in such a quantity that the resin mass becomes paste-like, the gap volume of the filler is substantially filled by the hardened material, and for the purpose of use in comparison with hardened resin improved physical properties of the hardened mass with respect to its compressive strength, temperature resistance and/or thermal expansion as well as with respect to the setting properties of the seal are achievable.

2. Method according to claim 1, characterized in that the paste-like resin mass containing filler is placed into an inner wrapping element (16 ; 20) arranged in the outer wrapping (7).

3. Lined seal for installation between two sealing surfaces deviating from a plane parallel form, especially between distorted flanges (1, 6) of an enamelled apparatus, comprising a compensating insert of a resin mass formed and hardened between the sealing surfaces to be sealed, which mass is provided between two elastic sealing insert rings (2, 5) which are surrounded by an outer wrapping (7) of polytetrafluoroethylene or the like wrapping material, characterized in that an inner wrapping element (16 ; 20) surrounds the compensating insert of the resin mass (3) at least in the region of its inner periphery, and that the hardened resin mass contains a filler of powdered quartz or the like inorganic material in the form of powder or fibers in such a quantity that the gap volume of the filler is substantially filled by the hardened resin material.

4. Lined seal according to claim 3, characterized in that the inner wrapping element is a component of an inner wrapping (16) open only to the outer circumference, the inner end (17) of said wrapping forming a toroid-like filler ring, partially filling the space (18) between the radial inner surface of the insert rings (2, 5) and the inner wrapping portion (19) of the outer wrapping (7).

5. Lined seal according to claim 3 or 4, characterized in that the percentage of the quartz in the case of powdered quartz with a grain size 10 amounts to 45 %.

6. Lined seal according to claim 3 or 4, characterized in that the percentage of the quartz in the case of powdered quartz with a grain size 00 amounts to 57 %.

## Revendications

1. Procédé de fabrication d'un joint d'étanchéité garni, entre deux surfaces d'étanchéité s'écartant d'une réalisation à plans parallèles, notamment entre des ailes gauchies (1, 6) d'un appareil émaillé, dans lequel une masse de résine fluable et durcissable est placée dans une enveloppe externe (7) du joint d'étanchéité et est durcie entre les surfaces d'étanchéité lui conférant sa forme, de manière à constituer une pièce incorporée de compensation, caractérisé par le fait que, préalablement à l'insertion, l'on ajoute à la masse de résine une substance de garnissage en poudre de quartz ou en un matériau analogue inorganique sous forme pulvérulente ou fibreuse, selon une quantité telle que la masse de résine devienne pâteuse, que le volume interstitiel de la substance de garnissage soit sensiblement comblé par le matériau durci et qu'il soit possible d'atteindre pour l'objectif d'utilisation, par comparaison avec une résine durcie, des propriétés physiques améliorées de la masse durcie concernant sa résistance à la pression, sa stabilité thermique et/ou sa dilatation thermique, ainsi que le comportement du joint d'étanchéité au tassement.

2. Procédé selon la revendication 1, caractérisé par le fait que la masse de résine pâteuse renfermant une substance de garnissage est placée dans un élément interne d'enrobage (16 ; 20) situé dans l'enveloppe externe (7).

3. Joint d'étanchéité garni destiné à être interposé entre deux surfaces d'étanchéité déviant d'une réalisation à plans parallèles, notamment entre des ailes gauchies (1, 6) d'un appareil émaillé, présentant

**0 079 448**

une pièce incorporée de compensation en une masse de résine conformée et durcie entre les surfaces d'étanchéité devant être rendues hermétiques, qui est interposée entre deux bagues élastiques d'étanchéité (2, 5) prisonnières, entourées par une enveloppe externe (7) en polytétrafluoréthylène ou en un matériau d'enrobage analogue, caractérisé par le fait qu'un élément interne d'enrobage (16 ; 20) entoure la pièce incorporée de compensation constituée par la masse de résine (3), au moins au voisinage de sa délimitation marginale interne ; et par le fait que la masse de résine durcie renferme une substance de garnissage en poudre de quartz ou en un matériau analogue inorganique sous forme pulvérulente ou fibreuse, selon une quantité telle que le volume interstitiel de la substance de garnissage soit sensiblement comblé par la résine durcie.

4. Joint d'étanchéité garni selon la revendication 3, caractérisé par le fait que l'élément interne d'enrobage fait partie d'une enveloppe interne (16) qui est ouverte seulement en direction du pourtour externe, et dont l'extrémité interne (17) forme une bague de comblement en forme de bourrelet annulaire, comblant partiellement l'espace intermédiaire (18) entre la face radiale interne des bagues prisonnières (2, 5) et la partie interne d'enveloppement (19) de l'enveloppe externe (7).

5. Joint d'étanchéité garni selon la revendication 3 ou 4, caractérisé par le fait que la part de quartz est de 45 % lorsque la poudre de quartz présente une granulométrie 10.

6. Joint d'étanchéité garni selon la revendication 3 ou 4, caractérisé par le fait que la part de quartz est de 57 % lorsque la poudre de quartz présente une granulométrie 00.

FIG. 1

FIG. 2

FIG. 3

FIG. 4

FIG. 5